# EUROPÄISCHE PATENTSCHRIFT

(11) **EP 1 052 229 B1**
(45) Veröffentlichungstag und Bekanntmachung des Hinweises auf die Patenterteilung: **28.07.2004**
(21) Anmeldenummer: 00201657.4
(22) Anmeldetag: 09.05.2000
(51) Int. Cl.: C03B 7/11

(54) **Plattenförmiges Schermesser**
Plate-shaped cutting knife
Couteau de coupe de forme aplatie

(30) Priorität: 14.05.1999 AT 33699 U
(43) Veröffentlichungstag der Anmeldung: 15.11.2000
(73) Patentinhaber: CERATIZIT Austria Gesellschaft m.b.H., 6600 Reutte /Tirol (AT)
(72) Erfinder: Gruber, Bernd, 6600 Pflach (AT); Reinhardt, Herrmann, 98593 Hohleborn (DE); Schretter, Michael, 6632 Ehrwald (AT)
(74) Vertreter: Lohnert, Wolfgang, Dr.

(56) Entgegenhaltungen:
- DE-B- 1 128 089
- FR-A- 2 306 946
- US-A- 3 193 926

## Beschreibung

Die Erfindung betrifft ein plattenförrniges Schermesser aus Hartmetall zum Abscheren von Tropfen aus flüssigem Glas mit einem etwa V-förmigen oder kreisbogenförmigen Schneidenbereich, der in bezug auf die Plattendicke d einen keilförmigen Querschnitt aufweist.

Derartige Schermesser wie sie beispielsweise im AT-U-2 018 beschrieben sind, sind paarweise auf vollautomatischen Anlagen im Einsatz und scheren durch gegenläufige Bewegungen aus einem von einem Glasspeiser zugeführten Strang von flüssigem Glas Glastropfen ab, die dann zu Glasflaschen, Behälterglas, Bildschirmen und ähnlichen Erzeugnissen weiterverarbeitet werden.
Insbesondere beim Abscheren von kleineren Glastropfen, wie es bei der Herstellung von Glasflaschen, Behälterglas oder Glühlampen vorkommt, erfolgt der Abschervorgang mit einer sehr hohen Frequenz, und zwar mit etwa 100 Abscherschnitten pro Minute und darüber.

Aufgrund dieser hohen Frequenz stehen die Schermesser über einen verhältnismäßig langen mittleren Zeitraum in direktem Kontakt mit der Glasschmelze, die eine Temperatur je nach Glasart und herzustellendem Glasgegenstand zwischen etwa 1100°C und 1300°C aufweist. Dadurch werden sie durch die Glasschmelze, trotz Kühlung der Messer mit Kühlemulsionen, auf eine Temperatur von bis zu etwa 400°C aufgeheizt, wodurch der Verschleiß der Schermesser beschleunigt wird.

Die FR-A-2306946 beschreibt Schermesser der beschriebenen, konstruktiven Ausgestaltung bei denen der Schneidenkörper für den Schneidenbereich mit keilförmigem Querschnitt aus Hartmetall hergestellt sein kann. Der restliche Teil des Schermessers, der Tragrahmen für den Schneidenkörper, besteht aus einem Werkstoff mit hoher Wärmeeindringzahl, hoher Verschleißfestigkeit und guter Wärmeleitfähigkeit. Der keilförmig zulaufende Schneidenkörper reicht dabei praktisch vollständig bis ein den Randbereich des Schermessers bzw. bis zu einem Teil des Tragrahmens, der keilförmig zuläuft, wodurch es zu Nachteilen beim Wärmetransport vom Schneidenbereich kommt.

In der US-A-3 193,926 ist ein ähnliches, im wesentlichen einstückiges Schermesser beschrieben, bei dem lediglich die Seite des keilförmig zulaufenden Schneidenbereiches, welche mit dem Glas in direktem Kontakt steht, mit einer dünnen Schicht aus Hartmetall laminiert ist. Auch bei diesem Schermesser reicht der keilförmig zulaufende Schneidenbereich bis an den Rand des Schermessers, was mit Nachteilen bei der Wärmeabfuhr vom Schneidenbereich verbunden ist.

Die Aufgabe der vorliegenden Erfindung ist es, plattenförmige Schermesser aus Hartmetall zum Abscheren von Tropfen aus flüssigem Glas zu schaffen, die sich auch bei sehr hohen Abscherfrequenzen deutlich weniger aufheizen und damit einem geringeren Verschleiß unterliegen.

Erfindungsgemäß wird dies dadurch erreicht, daß das Hartmetall eine Wärmeleitfähigkeit von mindestens 85W/m°K aufweist und daß das Schermesser beidseitig anschließend an den Schneidenbereich mit keilförmigem Querschnitt einen Randbereich aufweist, der nicht keilförmig zuläuft und eine mittlere Breite b aufweist, die im Bereich von 5 % bis 30 % von der gesamten Schermesserbreite B in diesem Abschnitt liegt.

Auf diese Weise wird einerseits die Wärmeaufnahmekapazität des Schermessers vergrößert und andererseits die Ableitung der vom Messer aufgenommenen Wärmemenge an die Kühlemulsion beschleunigt, so dass partielle Überhitzungen der Schermesser vermieden werden.
Ebenso erhöht sich dadurch die Steifigkeit und damit die Festigkeit gegen die höhere Schlagbelastungen bei hohen Schneidfrequenzen.

Zur Erhöhung der Wärmeaufnahme der Schermesser ist es einerseits aus Kostengründen da Hartmetall teurer ist und andererseits aus Platzgründen und aufgrund der großen Beschleunigungen und Verzögerungen, die durch die hohen Abscherfrequenzen auftreten nicht möglich die Abmessungen der Schermesser beliebig zu vergrößern.

Erfindungsgemäß hat es sich jedoch herausgestellt, dass bereits geringfügige Volumensvergrößerungen des Schermessers durch nicht keilförmig zulaufende Abschnitte, angrenzend an den unmittelbaren Schneidkantenbereich deutliche Verbesserungen bringen, um lokale Überhitzungen zu vermeiden.

Als besonders vorteilhaft hat es sich herausgestellt, wenn die Wärmeleitfähigkeit des Hartmetalls einen Wert im Bereich zwischen 90 und 100W/m°K aufweist.

Eine Erhöhung der Wärmeleitfähigkeit des Hartmetalles wird in der Regel tendenziell durch möglichst hohe Wolframkarbidanteile, möglichst keine Zusatzkarbide und eher geringe Bindemetallanteile erreicht.

Darüber hinaus ist es von Vorteil, wenn das Hartmetall möglichst grobkörnig ist und durchschnittliche Korngrößen von mindestens 2µm aufweist.

Als eine besonders vorteilhafte, für Schermesser zum Abscheren von flüssigen Glastropfen geeignete Hartmetall-Legierung hat sich eine mit 91 Gew.% Wolframkarbid und 9 Gew.% Kobalt bewährt.
Diese Legierung ist insbesondere auch besonders widerstandsfähig gegen die im Betrieb der Schermesser auftretenden Schlagbeanspruchungen.

Eine weitere Verbesserung bezüglich der Vermeidung einer unzulässigen Erwärmung des Schermessers wird dadurch erreicht, dass die zum Glasspeiser gerichtete Oberfläche des Schermessers außerhalb des Glaskontaktbereiches eine Beschichtung mit vergleichsweise schlechter Wärmeleitfähigkeit und die gegenüberliegende Oberfläche außerhalb des Glaskontaktbereiches eine Beschichtung mit guter Wärmeleitfähigkeit aufweist. Dadurch wird einerseits eine zu schnelle Erwärmung des Schermessers durch die Glasschmelze vermieden und andererseits die aufgenommene Wärme möglichst schnell wieder an die Kühlemulsion abgegeben.

Im besonderen hat sich für die Schicht mit schlechter Wärmeleitfähigkeit Aluminiumoxid und für die Schicht mit guter Wärmeleitfähigkeit Kupfer bewährt.

Insgesamt ist es zur weitgehenden Reduzierung der Absetzung von Glasabrieb und damit verringertem Verschleiß des Schermessers von Vorteil, dass die Bearbeitungsriefen im Bereich des Glaskontaktes im wesentlichen in Schnittrichtung des Schermessers verlaufen.

Eine weitere Maßnahme um einen erhöhten Verschleiß des Schermessers zu vermeiden besteht darin, dass die Unterseite des Schermessers eine 0,03 bis 0,5 mm tiefe Ausnehmung aufweist, die bis auf einen Bereich von etwa 1 bis 8 mm an die Schneidkante heranreicht und von dort aus konisch zur Schneidkante hin ausläuft.
Durch diese Freistellung der Schneidkante wird die Fläche nochmals verringert, auf der sich Glasabrieb absetzen kann und zu Qualitätsverschlechterungen an der Schnittfläche des Glases führt.

Im folgenden wird die Erfindung anhand von Zeichnungen näher erläutert:

Es zeigen:
- Figur 1: die Prinzipskizze eines erfindungsgemäßen Schermessers in Draufsicht
- Figur 2: die Unterseite des Schermessers nach Figur 1
- Figur 3: das Schermesser nach Figur 1 im Schnitt A-A
- Figur 4: die Prinzipskizze einer Abschervorrichtung mit paarweise eingesetzten erfindungsgemäßen Abschermessem in Seitenansicht

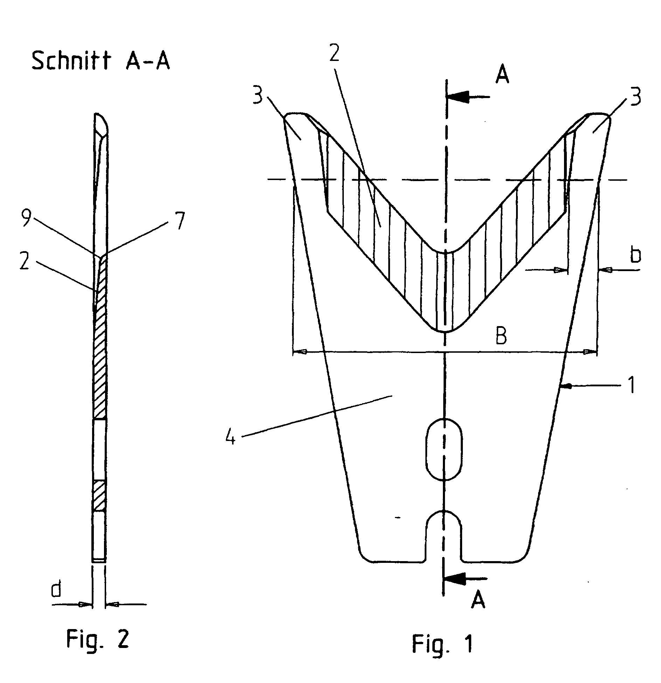

Das erfindungsgemäße plattenförmige Schermesser -1- nach den Figuren 1 bis 3 ist aus einer Hartmetall-Legierung mit 91 Gew.% Wolframkarbid und 9 Gew.% Kobalt gefertigt. Die Oberseite -4- ist bis auf den Schneidkantenbereich -2- plan ausgeführt. Der V-förmig ausgestaltete Schneidenbereich -2- weist in bezug auf die Plattendicke d des Schermessers einen keilförmigen Querschnitt auf. An beiden Seiten an diesen Schneidenbereich -2- anschließend, weist das Schermesser -1- einen Randbereich -3- auf, der nicht keilförmig zuläuft.

Dieser Randbereich -3- ist so dimensioniert, dass seine in bezug auf den gesamten Schneidenbereich -2- gesehene mittlere Breite b etwa 15 % von der gesamten Schermesserbreite B in diesem Schermesserabschnitt beträgt. Auf der Unterseite -5- weist das Schermesser eine Ausnehmung -6- auf, die bis knapp an die Schneidkante -7- heranreicht wodurch eine Freistellung der Schneidkante erreicht wird. Der keilförmig zulaufende Schneidenbereich -2- geht über eine stärker geneigte Fläche -9- oder über einen Übergangsradius direkt in die Schneidkante -7- über. Im Bereich des keilförmig zulaufenden Schneidenbereiches -2- verlaufen die Oberflächenriefen der Schleifbearbeitung in Schnittrichtung.

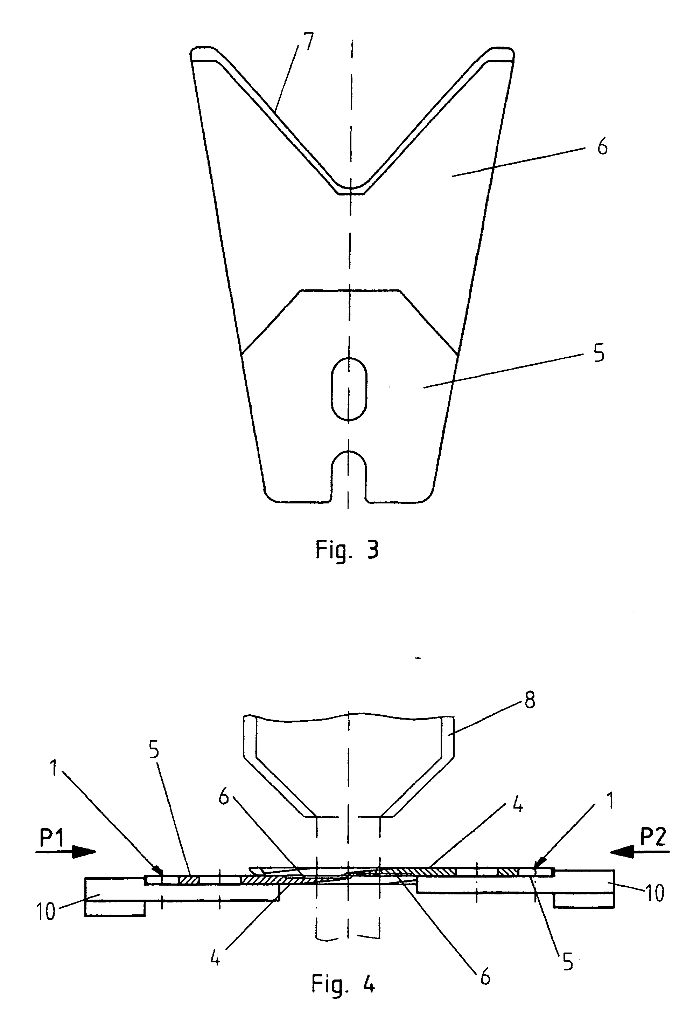

Die Abschereinrichtung nach Figur 4 besteht aus zwei seitlich angeordneten Scherarmen -10-, die sich mit einer einstellbaren Schnittgeschwindigkeit aufeinander zu- und voneinander wegbewegen. Auf jedem dieser Scherarme -10- ist ein erfindungsgemäßes Schermesser -1- mit V-förmigem Schneidenbereich -2- so angeordnet, dass sich die V-förmigen Schneiden gegenüberliegen. Das Schermesser -1- des rechten Scherarmes -10- in Figur 4 ist etwas höher positioniert und gleitet mit einem Spiel von 0,03 mm bis 0,08 mm in Schnittrichtung P2 über dem etwas tiefer positionierten Schermesser -1- des linken Scherarmes -10- mit der Schnittrichtung P1. Das Schermesser -1- des rechten Scherarmes -10- ist mit seiner Oberseite -4- dem Glasspeiser -8- zugewandt und mit einer schlecht wärmeleitenden Beschichtung aus Aluminiumoxid versehen. An seiner Unterseite -5- mit der Ausnehmung -6-, die von der Kühlemulsion beaufschlagt wird, ist dieses Schermesser -1- mit einer Beschichtung aus Kupfer, die eine gute Wärmeleitfähigkeit aufweist, versehen.

Das Schermesser -1- des linken Scherarmes -10- hingegen ist mit seiner Unterseite -5- und der Ausnehmung -6- dem Glasspeiser -8- zugewandt und daher an diesen Flächen mit der schlecht wärmeleitenden Beschichtung aus Aluminiumoxid versehen. An seiner Oberseite, die mit Kühlemulsion beaufschlagt wird, weist dieses Messer die gut wärmeleitende Beschichtung aus Kupfer auf. Auf diese Weise wird eine verzögerte Wärmeaufnahme von der Glasschmelze sowie eine beschleunigte Wärmeabgabe an die Kühlemulsion erreicht, wodurch sich die Temperaturen der Schermesser in Praxis auf etwa 100°C bis 200°C einpendeln.

## Patentansprüche

1. Plattenförmiges Schermesser (1) aus Hartmetall zum Abscheren von Tropfen aus flüssigem Glas mit einem etwa V-förmigen oder kreisbogenförmigen Schneidenbereich (2), der in bezug auf die Plattendicke d einen keilförmigen Querschnitt aufweist,
**dadurch gekennzeichnet,**
**dass** das Hartmetall eine Wärmeleitfähigkeit von mindestens 85W/m°K aufweist und dass das Schermesser (1) beidseitig anschließend an den Schneidenbereich (2) mit keilförmigem Querschnitt einen Randbereich (3) aufweist, der nicht keilförmig zuläuft und eine mittlere Breite b aufweist, die im Bereich von 5 % bis 30 % der gesamten mittleren Schermesserbreite B in diesem Abschnitt liegt.

2. Plattenförmiges Schermesser (1) aus Hartmetall nach Anspruch 1, **dadurch gekennzeichnet, dass** die Wärmeleitfähigkeit im Bereich zwischen 90 - 100W/m°K liegt.

3. Plattenförmiges Schermesser (1) aus Hartmetall nach Anspruch 1 oder 2, **dadurch gekennzeichnet, dass** die durchschnittliche Korngröße des Hartmetalles mindestens 2 µm beträgt.

4. Plattenförmiges Schermesser (1) aus Hartmetall nach einem der Ansprüche 1 bis 3, **dadurch gekennzeichnet, dass** das Hartmetall aus 91 Gew.% Wolframkarbid und 9 Gew% Kobalt besteht.

5. Plattenförmiges Schermesser (1) aus Hartmetall nach einem der Ansprüche 1 bis 4, **dadurch gekennzeichnet, dass** die zum Glasspeiser (8) gerichtete Oberfläche (4,5) außerhalb des Glaskontaktbereiches eine Beschichtung mit schlechter Wärmeleitfähigkeit und die gegenüberliegende Oberfläche (5,4) außerhalb des Glaskontaktbereiches eine Beschichtung mit guter Wärmeleitfähigkeit aufweist.

6. Plattenförmiges Schermesser (1) aus Hartmetall nach Anspruch 5, **dadurch gekennzeichnet, dass** die Beschichtung mit schlechter Wärmeleitfähigkeit aus Aluminiumoxid und die Beschichtung mit guter Wärmeleitfähigkeit aus Kupfer besteht.

7. Plattenförmiges Schermesser (1) aus Hartmetall nach einem der Ansprüche 1 bis 6, **dadurch gekennzeichnet, dass** die Bearbeitungsriefen im Bereich des Glaskontaktes im wesentlichen in Schnittrichtung des Schermessers verlaufen.

8. Plattenförmiges Schermesser (1) aus Hartmetall nach einem der Ansprüche 1 bis 7, **dadurch gekennzeichnet, dass** die Unterseite (5) des Schermessers (1) eine 0,03 bis 0,5 mm tiefe Ausnehmung (6) aufweist, die bis auf einen Bereich von 1 bis 8 mm an die Schneidkante (7) heranreicht und von dort aus konisch zur Schneidkante hin ausläuft.

## Claims

1. Plate-shaped sharing knife (1) made of hard metal for shearing off droplets of liquid glass with a roughly V-shaped or circular-shaped cutting region (2) that has a wedge-shaped cross section with respect to the plate thickness d, **characterized in that** the hard metal has a thermal conductance of at least 85 W/mK and that the shear knife (1) has on both sides, adjoining the cutting region (2) with wedge-shaped cross section, an edge region (3) which does not have a wedge-shape and has an average width b which is in a rage of 5 % to 30 % of the total width of the shearing knife B in this section.

2. Plate-shaped shearing knife (1) made of hard metal according to claim 1, **characterized in that** the thermal conductance is in a range between 90 - 100 W/mK.

3. Plate-shaped shearing knife (1) made of hard metal according to claim 1 or 2, **characterized in that** the average grain size of the hard metal is at least 2 µm.

4. Plate-shaped shearing knife (1) made of hard metal according to one of claims 1 to 3, **characterized in that** the hard metal consists of 91 wt% of tungsten carbide and 9 wt% of cobalt.

5. Plate-shaped shearing knife (1) made of hard metal according to one of claims 1 to 4, **characterized in that** the surface (4,5) directed towards the glass reservoir (8) outside of the glass contact region has a coating of poor thermal conductance and the opposing surface (5,4) outside of the glass contact region has a coating with good thermal conductance.

6. Plate-shaped shearing knife (1) made of hard metal according to claim 5, **characterized in that** the coating with poor thermal conductance consists of aluminium oxide and the coating with good thermal conductance consists of copper.

7. Plate-shaped shearing knife (1) made of hard metal according to one of claims 1 to 6, **characterized in that** the processing grooves essentially run in the cutting direction of the shearing knife in the region of the glass contact.

8. Plate-shaped shearing knife (1) made of hard metal according to one of claims 1 to 7, **characterized in that** the underside (5) of the shearing knife (1) has a 0.03 to 0.5 mm-deep recess (6) that extends down to a range of 1 to 8 mm at the cutting edge (7) and from there flares out conically to the cutting edge.

## Revendications

1. Lame de cisaille (1) en forme de plaque en métal dur pour couper des gouttes de verre fondu, comportant une zone de coupe approximativement en forme de V ou circulaire qui présente, par rapport à l'épaisseur d de la plaque, une section transversale cunéiforme, **caractérisée en ce que** le métal dur possède une conductibilité thermique d'au moins 85 W/m°K et que la lame de cisaille (1) comporte - sur les deux cotés de la zone de coupe de section transversale cunéiforme et adjacente à celle-ci - une zone marginale qui n'est pas cunéiforme et dont la largeur moyenne b est comprise entre 5% et 30% de la largeur totale B de la lame dans cette partie.

2. Lame de cisaille (1) en forme de plaque en métal dur selon la revendication 1, **caractérisée en ce que** la conductibilité thermique est comprise entre 90 et 100 W/m°K.

3. Lame de cisaille (1) en forme de plaque en métal dur selon la revendication 1 ou 2, **caractérisée en ce que** la taille moyenne des grains du métal dur est d'au moins 2 micromètres.

4. Lame de cisaille (1) en forme de plaque en métal dur selon l'une quelquonque des revendications 1 à 3, **caractérisée en ce que** le métal dur est composé de 91 % en poids de carbure de tungstène et 9 % en poids de cobalte.

5. Lame de cisaille (1) en forme de plaque en métal dur selon l'une quelquonque des revendications 1 à 4, **caractérisée en ce que** la face (4, 5) de la lame dirigée vers le réservoir d'alimentation (8) comporte, à l'extérieur de la zone de contact avec le verre, un revêtement de conductibilité thermique faible, et la face opposée (5, 4), à l'extérieur de la zone de contact avec le verre, un revêtement de forte conductibilité thermique.

6. Lame de cisaille (1) en forme de plaque en métal dur selon la revendication 5, **caractérisée en ce que** le revêtement de conductibilité thermique faible est composé d'oxyde d'aluminium et le revêtement de conductibilité thermique élevé de cuivre.

7. Lame de cisaille (1) en forme de plaque en métal dur selon l'une quelquonque des revendications 1 à 6, **caractérisée en ce que** les rainures de meulage situées dans la zone de contact du verre suivent un tracé orienté essentiellement dans le sens de la coupe.

8. Lame de cisaille (1) en forme de plaque en métal dur selon l'une quelquonque des revendications 1 à 7, **caractérisée en ce que** la face inférieure de la lame comporte un évidement d'une profondeur de 0,03 à 0,5 mm qui s'étend jusqu'à une zone d'environ 1 à 8 mm de l'arête tranchante et, à partir de là, se poursuit en forme conique en direction de l'arête tranchante.
